# EUROPEAN PATENT SPECIFICATION

(11) **EP 3 830 487 B1**
(45) Date of publication and mention of the grant of the patent: **21.08.2024**
(21) Application number: 19852914.1
(22) Date of filing: 23.07.2019
(51) Int. Cl.: F24C 15/20, F24C 1/02, A47J 36/06, A47J 36/38, A47J 43/04, H05B 6/80

(54) **COOKING APPLIANCE WITH HEIGHT-ADJUSTABLE LID COMPRISING A MICROWAVE GENERATION DEVICE**
KOCHGERÄT MIT HÖHENVERSTELLBAREM DECKEL, DAS EINE MIKROWELLENERZEUGUNGSVORRICHTUNG ENTHÄLT
APPAREIL DE CUISSON À COUVERCLE RÉGLABLE EN HAUTEUR COMPRENANT UN DISPOSITIF DE GÉNÉRATION DE MICRO-ONDES

(30) Priority: 27.07.2018 IN 201811028387
(43) Date of publication of application: 09.06.2021
(73) Proprietor: Sanandan, Sudhir, Delhi 110085 (IN)
(72) Inventor: Sanandan, Sudhir, Delhi 110085 (IN)
(74) Representative: Bryers Intellectual Property Ltd
(86) International application number: PCT/IB2019/056285
(87) International publication number: WO 2020/039280

(56) References cited:
- WO-A1-2017/095109
- WO-A1-2018/025095
- CA-C- 2 151 733
- KR-A- 20120 063 887
- TW-U- M 563 526
- US-A1- 2018 347 827

## Description

### FIELD OF INVENTION

The present disclosure relates to an apparatus for efficient cooking. More specifically, it relates to a cooking apparatus that can be integrated with other cooking and food preparation implements, thus increasing its utility.

### BACKGROUND OF THE INVENTION

Background description includes information that may be useful in understanding the present invention. It is not an admission that any of the information provided herein is prior art or relevant to the presently claimed invention, or that any publication specifically or implicitly referenced is prior art.

Microwave cooking is a well-established technique. It is particularly well entrenched cooking method at least for city dwellers having fast paced lifestyle. It relies upon microwave energy to cook food quickly and safely. Heating and other cooking operations that may take a long time while using traditional cooking techniques, such as open flame techniques, can be performed much faster using microwave energy.

Presently available microwave cooking devices are generally standalone devices that are capable of doing cooking based on microwave energy alone. Other forms of cooking such as using open flame cooking or induction cooking, or any other cooking related operation such as mixing, blending, grinding or kneading cannot be clubbed along with microwave based heating or cooking using conventional microwave cooking devices.

In view of advantages associated with microwave cooking, it would be useful if a microwave based cooking device could be configured to enable its use along with other kitchen implements such as cooking range, mixers, blinders, grinders etc. This would reduce number of kitchen implements leading to lower overall cost. It would be further advantageous if such a device could be configured in a way not requiring any storage space on cooking platform thereby reducing space requirement in kitchen. International Application Publication No. WO 2017/095109 describes a smoke exhaust hood apparatus having a heater for cooking food. Further, International Application Publication No. WO 2018/025095 A1 describes a cooking apparatus that uses multi-source of heating.

There is therefore a need in the art to provide for a microwave cooking apparatus that can be integrated with other cooking implements.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

The use of any and all examples, or exemplary language (e.g. "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

### OBJECTS OF THE INVENTION

An object of the present disclosure is to provide a microwave based cooking apparatus that combines with other kitchen implements to provide microwave heating/cooking in combination with other preparatory operations and traditional methods of heating/ cooking of food.

Another object of the present disclosure is to provide a microwave based cooking apparatus that can be integrated with other cooking implements thereby increasing its utility and reducing number of cooking implements required in kitchen.

Another object of the present disclosure is to provide a microwave based cooking apparatus that does not require any storage space on cooking platform in kitchen.

Yet another object of the present disclosure is to provide for a microwave based cooking apparatus that is always available for integration with other cooking implements.

### SUMMARY OF THE INVENTION

Aspects of the present disclosure relate to a cooking apparatus that enables combining of microwave based heating/cooking with either of blender/mixer grinder functionality and traditional cooking using open flame and/or induction cooking. In an aspect, a single cooking apparatus enables this combination thereby reducing number of cooking implements required in kitchen with corresponding saving in cost and space.

The invention concerns a cooking apparatus as defined in claim 1. Preferred embodiments are defined in the dependent claims. In an aspect, the disclosed cooking apparatus comprises a lid and at least one microwave producing device such as a magnetron, coupled with the lid and providing microwaves for microwave-based cooking/heating. The lid and the coupled microwave producing device can be fixed to a lower end of a lifting and lowering mechanism such that the lid along with the coupled microwave producing device microwave producing device can be lowered and lifted up manually and retained in any desired position.

In an aspect, upper end of the lifting and lowering mechanism can be configured with a lower side of a chimney so that the lid along with the coupled microwave producing device can be lowered down over a container placed over a traditional source of heat for cooking and heating, such as a gas stove or an induction plate.

In an aspect, upper end of the lifting and lowering mechanism can be moved horizontally by sliding relative to the lower side of a chimney so that the lid along with the coupled microwave producing device can be positioned over a second container belonging to a blending, stirring, grinding and mixing device.

Thus, the lid in a lowered position can be operatively coupled with a container holding a food item, and wherein the container is any one of a first container for cooking food using conventional source of heat, and a second container for preparatory operations comprising any or a combination of blending, stirring, grinding and mixing. In an aspect, coupling of the lid of the proposed apparatus with the containers enables heating of the contents of the container through the microwaves generated by the microwave producing device.

In an aspect, the cooking apparatus further includes a rectangular frame configured on the lower side of the chimney, and the frame, besides holding the upper end of the lifting and lowering mechanism, enables the horizontal sliding functionality for sliding of the lifting and lowering mechanism along with the lid and the coupled microwave producing device. The rectangular frame incorporates a pair of slots in two opposite sides of the frame to hold and enable sliding of the upper end of the rectangular frame.

In an aspect, the lifting and lowering mechanism comprises a top flange that engages with the slots in the frame. The top flange can incorporate a pair of L shaped support lugs projection out of outer periphery of the top flange at two diametrically opposite locations. The L shaped support lugs can be oriented such that they engage with the pair of slots in the two opposite sides of the rectangular frame to support the upper end of lifting and lowering mechanism, as well as to allow sliding of the lifting and lowering mechanism along with the attached lid and the coupled microwave producing device in the horizontal direction.

In an aspect, the lifting and lowering mechanism can further comprise a metallic bellow having an upper end fixed to the top flange and a lower end fixed to the lid; and a plurality of weight balancing linkages assembled in a set pattern with fiction hinges to enable manual lifting and lowering of the lid and the coupled microwave producing device. Thus, the set pattern of the plurality of weight balancing linkages allow assembly of the weight balancing linkages to move between an extended position and a collapsed position. The assembly of the weight balancing linkages is located within the bellow; and upper end of the assembly of the weight balancing linkages is fixed to the top flange and a lower end is fixed to the lid to enable manual lifting and lowering of the lid and the coupled microwave producing device, The friction hinges hold the lid and the at least one microwave producing device in any desired position.

In an aspect, in the lowered position of the lid, when the lid couples with the container, the lid and the container form an enclosed space for holding the food items.

In an aspect, the lid can be coupled to the at least one microwave producing device through wave guide to guides microwaves generated by the coupled microwave producing device for their transfer from the microwave producing device to the container.

In an aspect, the lid and the first container can be of a hemispherical shape to enable reflection of microwaves inside the lid and the container for efficient cooking.

In an aspect, the cooking apparatus can includes at least one power transformer for regulating input power to the at least one microwave producing device, which can be located within the chimney.

In an aspect, the cooking apparatus can incorporate a display screen for user interface.

In an aspect, the cooking apparatus, when being used with the second container, can allow simultaneous or iterative use of any or a combination of heating, stirring, blending and grinding.

In an aspect, the cooking apparatus, when being used with the first container, can allow simultaneous or iterative use of any or a combination of microwave cooking and conventional cooking.

In an aspect, top of the container can include chokes for preventing leakage of microwaves during working.

In an aspect, the cooking apparatus can be configured as a remotely operable device through any or a combination of Internet, Wi-Fi, Bluetooth, Zigbee, and Near-Field Communication (NFC).

Various objects, features, aspects and advantages of the inventive subject matter will become more apparent from the following detailed description of preferred embodiments, along with the accompanying drawing figures in which like numerals represent like components.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 illustrates an exemplary front view showing general arrangement of the proposed microwave based cooking apparatus installed with chimney over a cooking range, in accordance with an exemplary embodiment of the present disclosure.
FIGs. 2A and 2B illustrate exemplary perspective views respectively showing a lid of the proposed cooking apparatus positioned above but away from a cooking container, and positioned to cover the cooking container, in accordance with an exemplary embodiment of the present disclosure.
FIG. 3 illustrates details of the chimney showing installation of various components of the proposed cooking apparatus, in accordance with an exemplary embodiment of the present disclosure.
FIG. 4 illustrates details of a frame provided below hood of the chimney for slidably fixing the proposed cooking apparatus, in accordance with an exemplary embodiment of the present disclosure.
FIG. 5 illustrates details of top flange used to support the lifting and lowering mechanism on the frame, in accordance with an exemplary embodiment of the present disclosure.
FIG. 6 illustrates an exploded view showing the chimney, the frame and the lifting and lowering mechanism for coupling the proposed cooking apparatus with the chimney, in accordance with an exemplary embodiment of the present disclosure.
FIG. 7 illustrates details showing top flange of the of the lifting and lowering mechanism slidably resting in slots in the frame, in accordance with an exemplary embodiment of the present disclosure.
FIG. 8 illustrates details of the lifting and lowering mechanism incorporating metal bellow and weight balancing linkages joined by friction hinges located with the metal bellow, in accordance with an exemplary embodiment of the present disclosure.
FIG. 9 illustrates a photograph of the 1 proposed microwave based cooking apparatus integrated with kitchen chimneys, in accordance with embodiments of the present disclosure.
FIGs. 10A and 10B illustrate the proposed apparatus being used with a blender/mixer grinder, in accordance with an embodiment of the present disclosure.

### DETAILED DESCRIPTION OF THE INVENTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the present disclosure as defined by the appended claims.

Each of the appended claims defines a separate invention, which for infringement purposes is recognized as including equivalents to the various elements or limitations specified in the claims. Depending on the context, all references below to the "invention" may in some cases refer to certain specific embodiments only. In other cases it will be recognized that references to the "invention" will refer to subject matter recited in one or more, but not necessarily all, of the claims.

Various terms are used herein. To the extent a term used in a claim is not defined, it should be given the broadest definition persons in the pertinent art have given that term as reflected in printed publications and issued patents at the time of filing.

The present invention discloses a cooking apparatus that enables, using a single microwave generating apparatus, to combine microwave heating/cooking functionality with blender/mixer grinder or with traditional cooking.

The cooking apparatus includes a lid coupled with at least one microwave producing device such as a magnetron, that acts as a source of microwaves, wherein the lid is configured with lower side of a chimney such that it can be horizontally moved to be placed over a first container being used for cooking using a traditional heat source , or over another container that is part of a grinder/ mixer/ blender. Thus, the single cooking apparatus enables combining of microwave-based heating/cooking with either the blender/mixer grinder functionality or traditional cooking using open flame and/or induction cooking reducing number of cooking implements required in kitchen with corresponding saving in cost and space.

In an aspect, horizontal sliding of the lid and the coupled microwave producing device is facilitated by a sliding coupling between a rectangular frame fixed to lower side of the chimney and a top flange of a lifting and lowering mechanism. The top flange is part of a lifting and lowering mechanism and incorporates a pair of L shaped support lugs projection out of its outer periphery at two diametrically opposite locations and oriented such that they engage with a pair of slots in the two opposite sides of the rectangular frame. The engagement between the L shaped support lugs and the corresponding slots not only supports an upper end of the lifting and lowering mechanism, as well as to allows sliding of the lifting and lowering mechanism along with the lid and the coupled microwave producing device that are attached to lower end of the lifting and lowering mechanism, in the horizontal direction.

In an aspect, the lifting and lowering mechanism further incorporates a plurality of weight balancing linkages assembled in a set pattern with fiction hinges configured between them to enable manual lifting and lowering of the lid and the coupled microwave producing device. Thus, the set pattern of the plurality of weight balancing linkages allow assembly of the weight balancing linkages to move between an extended position and a collapsed position. Upper end of the assembly of the weight balancing linkages is fixed to the top flange and its lower end is fixed to the lid to enable manual lifting and lowering of the lid and the coupled microwave producing device, The friction hinges hold the lid and the at least one microwave producing device microwave producing device in any desired position.

The assembly of the weight balancing linkages is located within a bellow having an upper end fixed to the top flange and a lower end fixed to the lid.

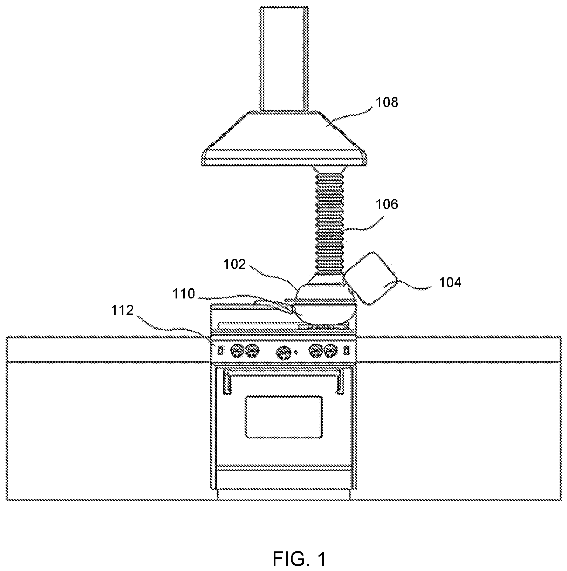

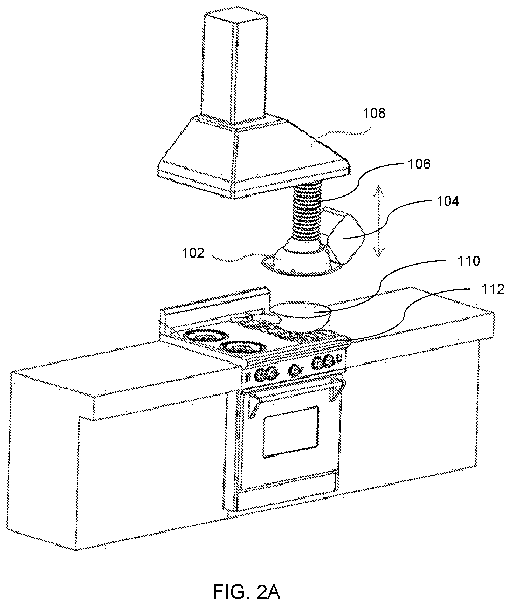

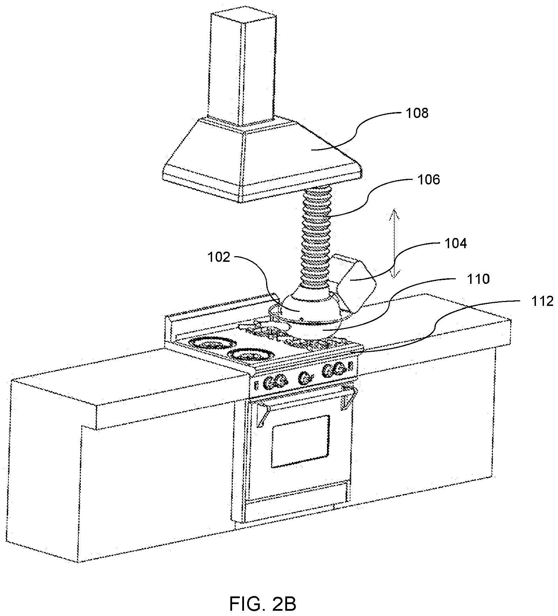

Referring now to FIGs. 1, 2A and 2B, where exemplary views showing general arrangement of the proposed microwave-based cooking apparatus installed with chimney over a cooking range are disclosed, the proposed cooking apparatus can include a lid 102, at least one microwave producing device such as a magnetron 104 coupled to the lid 102. The lid 102 and the coupled microwave producing device 104 can fixed to lower end of a lifting and lowering mechanism 106. Upper end of the lifting and lowering mechanism 106 can be coupled to lower side of chimney 108. Thus, the lid 102 and the coupled microwave producing device 104 are suspended from the chimney 108 with help of the lifting and lowering mechanism 106. The lifting and lowering mechanism 106 can be configured to enable manual lowering and raising of the lid 102 along with the coupled microwave producing device 104, and hold them in any desired position.

Also shown in FIG. 1 is a container 110 (also referred to as a first container 110) positioned on a heat source, such as a gas burner/stove built into a gas range 112, and the lid 102 covering the container 110. The proposed cooking apparatus in this position enables combining of microwave cooking /heating with a traditional cooking media. In an aspect, the disclosed cooking apparatus, when being used with the first container 110 in the manner shown in FIG. 1, can allow simultaneous or iterative use of any or a combination of microwave cooking and conventional cooking.

In an aspect, the lid 102 and the first container 110 can be of a hemispherical shape to enable reflection of microwaves inside the lid 102 and the container 110 for efficient cooking. In an aspect, in the lowered position of the lid 102, when the lid couples with the container 110, the lid 102 and the container 110 form an enclosed space for holding the food items.

In an aspect, the cooking apparatus can incorporate a display screen located at a suitable location, for user interface. In an exemplary embodiment, user interface can be a touch sensitive display that can receive inputs from various sensors and timers and in turn control the duration and power of microwaves being generated by microwave producing device 104 using appropriate control circuits, relays etc., as is well known in the art. In an exemplary embodiment, the microwave producing device 104 can form part of lid 102 itself and can be fully integrated with the lid 102. The lid 102 and microwave producing device 104 can be so designed and operatively connected so that microwaves generated by microwave producing device 104 are directed towards container that lid 102 is designed to cover. In an implementation, there can be a wave guide to direct the generated microwaves to the container.

In an aspect, the cooking apparatus, when being used with the first container 110, can allow simultaneous or iterative use of any or a combination of microwave cooking and conventional cooking through the interface.

In an aspect, top of the container can include chokes for preventing leakage of microwaves during working.

In an aspect, the cooking apparatus can be configured as a remotely operable device through any or a combination of Internet, Wi-Fi, Bluetooth, Zigbee, and Near-Field Communication (NFC). In another aspect, the apparatus or any of its sub-assemblies can also act as an Internet of Things (IoT) device, and connected/controlled through any or a combination of Internet, Wi-Fi, and Bluetooth.

FIGs. 2A and 2B illustrate exemplary perspective views respectively showing the lid 102 of the proposed cooking apparatus positioned above but away from the first cooking container 110, and positioned to cover the first cooking container 110 to provide microwave based heating to contents of the first container 110.

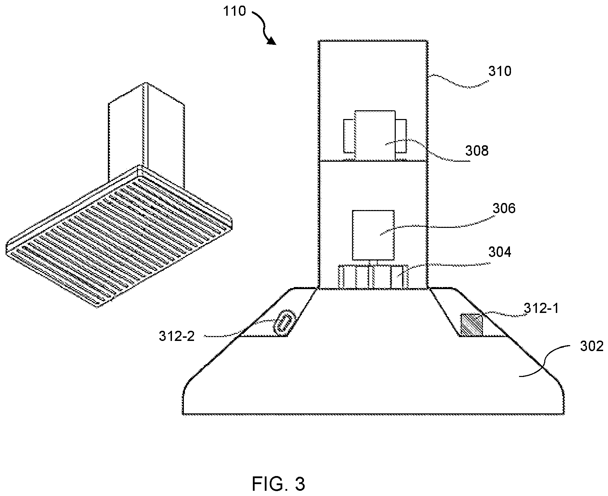

FIG. 3 illustrates details of the chimney 108 showing installation of various components of the proposed cooking apparatus, in accordance with an exemplary embodiment of the present disclosure. As shown, the chimney 108 comprises a hood 302, a duct 310, an exhaust fan 304 positioned at junction of the hood 302 and the duct 310, and a motor 306 that drives the exhaust fan 304. In an aspect, a transformer to meet power requirement of the microwave producing device (not shown here), such as transformer 308 can be located in the duct 310. Other electrical components of the microwave producing device such as parts 312-1 and 312-2, can be accommodated at suitable places in the hood 302.

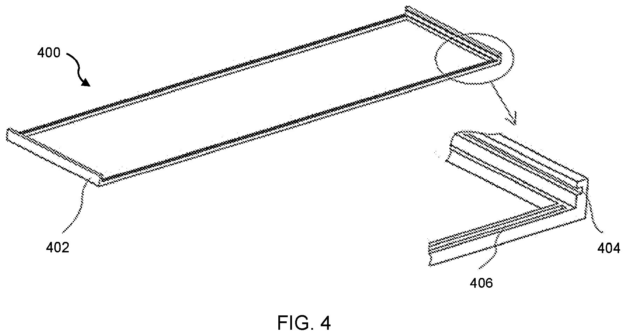

FIG. 4 illustrates details of a frame provided below hood of the chimney for slidably fixing the proposed cooking apparatus, in accordance with an exemplary embodiment of the present disclosure. The rectangular frame 400 is adapted to be fixed on lower side of the chimney hood by means of slots 404 in guide rails 402 that form two opposite sides of the frame 400. Other two sides can incorporate a pair of slots 406, one on each of the two opposite sides of the frame 400, to support the lifting and lowering mechanism of the proposed cooking apparatus.

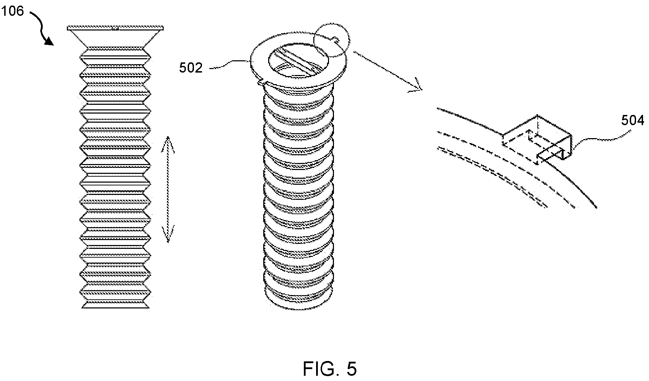

FIG. 5 illustrates details of top flange used for fixing the lid and microwave producing device assembly with the chimney through the frame and the lifting and lowering mechanism. The lifting and lowering mechanism 106 incorporates a top flange 502, which incorporates a pair of L shaped support lugs 504 projecting out of outer periphery of the top flange 502 at two diametrically opposite locations. The L shaped support lugs 504 can be oriented such that they engage with the pair of slots 406 (refer to FIG. 4) on the two opposite sides of the rectangular frame 400 to support the upper end of lifting and lowering mechanism 106, as well as to allow sliding of the lifting and lowering mechanism 106 along with the attached lid 102 and the coupled microwave producing device 104 in the horizontal direction.

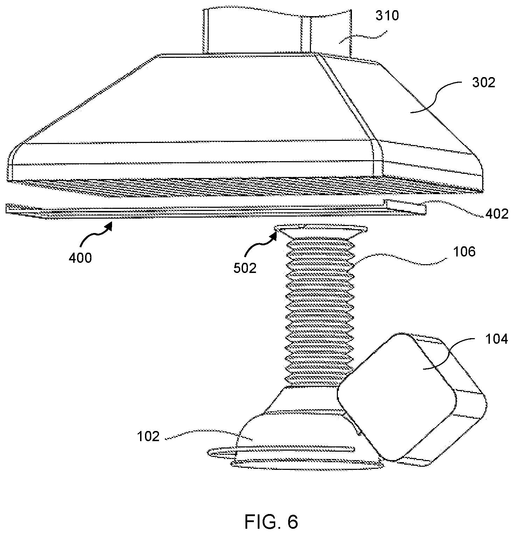

FIG. 6 illustrates an exploded view showing the chimney hood 302, the frame 400 and the lifting and lowering mechanism 106 for coupling the proposed cooking apparatus with the chimney. As shown upper end having the top flange 502, of the lifting and lowering mechanism 106 gets slidably engaged with the frame 400, which is fixed to bottom side of the chimney hood 302.

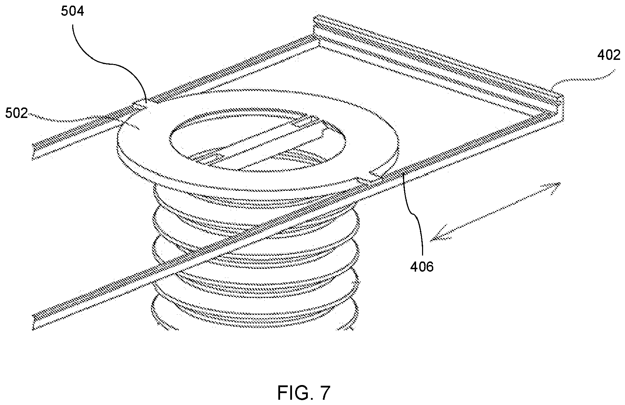

FIG. 7 illustrates details showing top flange 502 of the of the lifting and lowering mechanism 106 slidably resting in slots 406 in the frame 400.

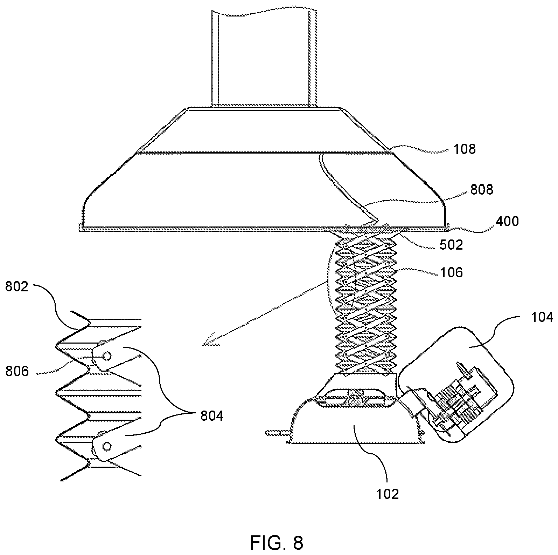

FIG. 8 illustrates details of the lifting and lowering mechanism 106, wherein as shown, the lifting and lowering mechanism 106 incorporates a metal bellow 802 and a plurality of weight balancing linkages 804 located within the metal bellow 802. The weight balancing linkages 804 can be joined through friction hinges 806 in a set pattern to form an assembly of the linkages. The set pattern of the plurality of weight balancing linkages 804 allows assembly of the weight balancing linkages to move between an extended position and a collapsed position. Upper end of the assembly of the linkages can be fixed to the top flange 502 and the lower end can be fixed to the lid 102, thereby enabling manual lowering and lifting of the lid 102 and the coupled microwave producing device 104 as the assembly of the linkages move between the extended position and the collapsed position. A cable such as 808 can supply power to the microwave producing device 104 from the transformer.

As shown, the assembly of the weight balancing linkages 804 is located within the bellow 802. In an aspect, the friction hinges hold the lid and the at least one microwave producing device in any desired position.

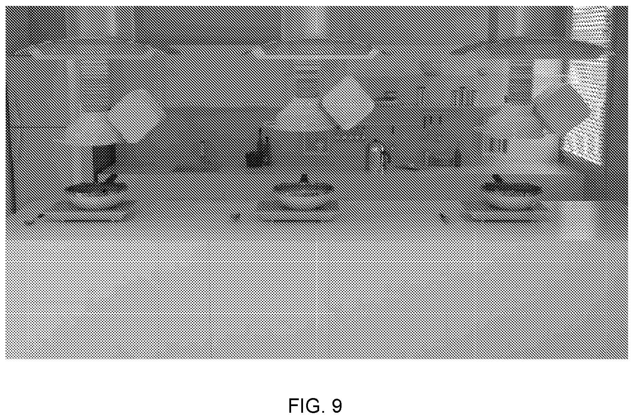

FIG. 9 illustrates a photograph of the proposed microwave based cooking apparatus integrated with kitchen chimneys, in accordance with embodiments of the present disclosure. As shown, in a kitchen having a plurality of cooking stations, each of the chimneys in the kitchen can be integrated with the proposed cooking apparatus to provide microwave based heating/cooking in addition to cooking by conventional heat source.

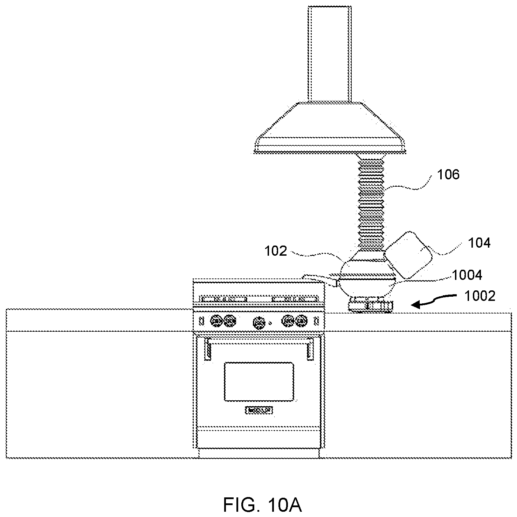

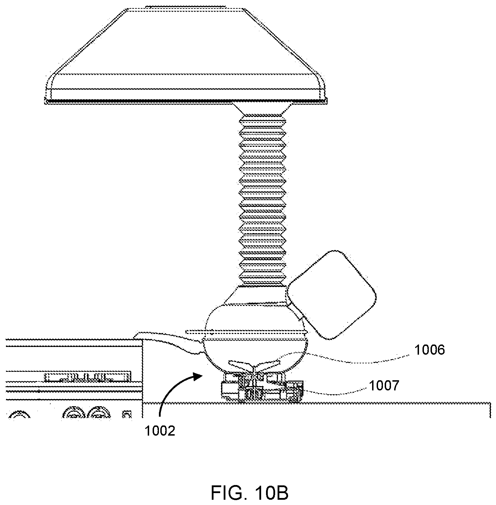

FIGs. 10A and 10B illustrate the proposed apparatus being used with a blender/mixer grinder 1002, in accordance with an embodiment of the present disclosure. As explained, the lid 102 and the coupled microwave producing device 104 can be moved horizontally to position the lid 102 over the container, referred to as a second container 1004, of the blender/mixer grinder 1002, and thereafter lowered such that the lid 102 covers the second container 1004. In this position the microwaves generated by the microwave producing device can be used to heat the contents in the second container in addition to any or combination of blending, grinding and mixing operations, which can be performed by blades 1006 driven by motor 1007 of the blender/mixer grinder 1002.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

### ADVANTAGES OF THE INVENTION

The present disclosure provides a microwave based cooking apparatus that combines with other kitchen implements to provide microwave heating/cooking in combination with other preparatory operations and traditional methods of heating/ cooking of food.

The present disclosure provides a microwave based cooking apparatus that can be integrated with other cooking implements thereby increasing its utility and reducing number of cooking implements required in kitchen.

The present disclosure provides a microwave based cooking apparatus that does not require any storage space on cooking platform in kitchen.

The present disclosure provides for a microwave based cooking apparatus that is always available for integration with other cooking implements.

## Claims

1. A cooking apparatus comprising:
a lid (102); and
at least one microwave producing device (104) that acts as a source of microwaves, and coupled with the lid (102); and
a lifting and lowering mechanism (106) carrying the lid (102) and the at least one microwave producing device (104) at a lower end for enabling vertically raising and lowering the lid (102) along with the at least one microwave producing device (104); wherein an upper end of the lifting and lowering mechanism (106) is configured with a lower side of a chimney (108);
wherein the lid (102) in a lowered position gets operatively coupled with a container (110) holding a food item, and wherein the container (110) is any one of a first container for cooking food using conventional source of heat, and a second container for preparatory operations comprising any or a combination of blending, stirring, grinding and mixing; and
wherein coupling of the lid (102) with the containers (110) enables heating of the contents of the container (110) through the microwaves generated by the at least one microwave producing device (104).

2. The cooking apparatus of claim 1, wherein the upper end of the lifting and lowering mechanism (106) is slidably configured with the lower side of a chimney (108) to enable sliding of the lifting and lowering mechanism (106) along with the lid (102) and the at least one microwave producing device (104), in horizontal direction; and wherein horizontally sliding the lid (102) and the at least one microwave producing device (104) enables the lid (102) to be positioned over the first container (110) or the second container.

3. The cooking apparatus of claim 2, wherein the cooking apparatus further includes a rectangular frame (400) configured on the lower side of the chimney (108); and wherein the upper end of the lifting and lowering mechanism (106) is slidably configured with the lower side of a chimney (108) through a pair of slots (406) provided in two opposite sides of the rectangular frame (400).

4. The cooking apparatus of claim 3, wherein the lifting and lowering mechanism (106) comprises;
a top flange (502) incorporating a pair of L shaped support lugs (504) projecting out of outer periphery of the top flange (502) at two diametrically opposite locations; wherein the L shaped support lugs (504) are oriented to engage with the pair of slots (406) in the two opposite sides of the rectangular frame (400) to support the upper end of lifting and lowering mechanism (106), as well as to allow sliding of the lifting and lowering mechanism (106) along with the attached lid (102) and the at least one microwave producing device (104) in the horizontal direction.

5. The cooking apparatus of claim 4, wherein the lifting and lowering mechanism (106) further comprises;
a metallic bellow (802) having an upper end fixed to the top flange (502) and a lower end fixed to the lid (102);
a plurality of weight balancing linkages (804) assembled in a set pattern with fiction hinges (806), the set pattern of the plurality of weight balancing linkages (804) allowing assembly of the weight balancing linkages (804) to move between an extended position and a collapsed position; and wherein the assembly of the weight balancing linkages (804) is located within the bellow (802); and wherein an upper end of the assembly of the weight balancing linkages (804) is fixed to the top flange (502) and a lower end is fixed to the lid (102) to enable manual lifting and lowering of the lid (102) and the at least one microwave producing device (104); and wherein the friction hinges (806) hold the lid (102) and the at least one microwave producing device (104) in any desired position.

6. The cooking apparatus of claim 1, wherein the lid (102) and the first container (110) are of a hemispherical shape, and wherein in the lowered position of the lid (102), when the lid (102) couples with the container (110), the lid (102) and the container (110) form an enclosed space for holding the food items.

7. The cooking apparatus of claim 1, wherein the lid (102) is coupled to the at least one microwave producing device (104) through wave guide, wherein the wave guide guides microwaves generated by the at least one microwave producing device (104) for their transfer from the at least one microwave producing device (104) to the container (110).

8. The cooking apparatus of claim 1, wherein the lid (102) and the first container (110) are of a hemispherical shape to enable reflection of microwaves inside the lid (102) and the container (110) for efficient cooking.

9. The cooking apparatus of claim 1, wherein the cooking apparatus includes at least one power transformer, located within the chimney (108), for regulating input power to the at least one microwave producing device (104).

10. The cooking apparatus of claim 1, wherein the cooking apparatus incorporates a display screen for user interface.

11. The cooking apparatus of claim 1, wherein top of the container (110) includes choke for preventing leakage of microwaves during working.

12. The cooking apparatus of claim 1, wherein the cooking apparatus is configured as a remotely operable device through any or a combination of Internet, Wi-Fi, Bluetooth, Zigbee, and Near-Field Communication (NFC).

## Patentansprüche

1. Kochgerät, Folgendes umfassend:
einen Deckel (102) und
mindestens eine Mikrowellenerzeugungsvorrichtung (104), die als Quelle für Mikrowellen fungiert und mit dem Deckel (102) gekoppelt ist; und
einen Anhebe- und Absenkmechanismus (106), der den Deckel (102) und die mindestens eine Mikrowellenerzeugungsvorrichtung (104) an einem unteren Ende trägt, damit der Deckel (102) zusammen mit der mindestens einen Mikrowellenerzeugungsvorrichtung (104) vertikal angehoben und abgesenkt werden kann; wobei ein oberes Ende des Anhebe- und Absenkmechanismus (106) mit der Unterseite eines Schornsteins (108) ausgelegt ist;
wobei der Deckel (102) in einer abgesenkten Position mit einem Behälter (110) wirkgekoppelt wird, der ein Lebensmittel enthält, und wobei der Behälter (110) ein erster Behälter zum Kochen von Lebensmitteln mittels einer gewöhnlichen Wärmequelle oder ein zweiter Behälter für Zubereitungsvorgänge, umfassend Pürieren, Rühren, Mahlen und Vermischen oder eine Kombination davon, ist; und
wobei das Koppeln des Deckels (102) mit dem Behälter (110) das Erwärmen des Inhalts des Behälters (110) durch die von der mindestens einen Mikrowellenerzeugungsvorrichtung (104) erzeugten Mikrowellen ermöglicht.

2. Kochgerät nach Anspruch 1, wobei das obere Ende des Anhebe- und Absenkmechanismus (106) mit der Unterseite eines Schornsteins (108) verschiebbar ausgelegt ist, um das Verschieben des Anhebe- und Absenkmechanismus (106) zusammen mit dem Deckel (102) und der mindestens einen Mikrowellenerzeugungsvorrichtung (104) in horizontale Richtung zu ermöglichen; und wobei das horizontale Verschieben des Deckels (102) und der mindestens einen Mikrowellenerzeugungsvorrichtung (104) ermöglicht, dass der Deckel (102) über dem ersten Behälter (110) oder dem zweiten Behälter positioniert wird.

3. Kochgerät nach Anspruch 2, wobei das Kochgerät ferner einen rechteckigen Rahmen (400) umfasst, der an der Unterseite des Schornsteins (108) ausgelegt ist; und wobei das obere Ende des Anhebe- und Absenkmechanismus (106) durch ein Paar Schlitze (406), die in zwei entgegengesetzten Seiten des rechteckigen Rahmens (400) vorgesehen sind, mit der Unterseite eines Schornsteins (108) verschiebbar ausgelegt ist.

4. Kochgerät nach Anspruch 3, wobei der Anhebe- und Absenkmechanismus (106) Folgendes umfasst:
einen oberen Flansch (502), der ein Paar L-förmige Auflagenasen (504) enthält, die vom Außenrand des oberen Flanschs (502) an zwei diametrisch entgegengesetzten Stellen nach außen vorstehen; wobei die L-förmigen Auflagenasen (504) dazu orientiert sind, in das Paar Schlitze (406) in den zwei entgegengesetzten Seiten des rechteckigen Rahmens (400) einzugreifen, um das obere Ende des Anhebe- und Absenkmechanismus (106) abzustützen sowie das Verschieben des Anhebe- und Absenkmechanismus (106) zusammen mit dem befestigten Deckel (102) und der mindestens einen Mikrowellenerzeugungsvorrichtung (104) in horizontale Richtung zu ermöglichen.

5. Kochgerät nach Anspruch 4, wobei der Anhebe- und Absenkmechanismus (106) ferner Folgendes umfasst:
einen Metallbalg (802), der mit dem oberen Ende am oberen Flansch (502) befestigt ist und mit dem unteren Ende am Deckel (102) befestigt ist;
mehrere Gewichtsausgleichsverbindungsglieder (804), die in einem festen Muster mit Reibungsscharnieren (806) montiert sind, wobei das feste Muster der mehreren Gewichtsausgleichsverbindungsglieder (804) zulässt, dass sich die Anordnung der Gewichtsausgleichsverbindungsglieder (804) zwischen einer ausgefahrenen Position und einer eingefahrenen Position bewegt; und wobei die Anordnung der Gewichtsausgleichsverbindungsglieder (804) innerhalb des Balgs (802) angeordnet ist; und wobei ein oberes Ende der Anordnung der Gewichtsausgleichsverbindungsglieder (804) am oberen Flansch (502) befestigt ist und ein unteres Ende am Deckel (102) befestigt ist, um das manuelle Anheben und Absenken des Deckels (102) und der mindestens einen Mikrowellenerzeugungsvorrichtung (104) zu ermöglichen; und wobei die Reibungsscharniere (806) den Deckel (102) und die mindestens eine Mikrowellenerzeugungsvorrichtung (104) in einer beliebigen gewünschten Position halten.

6. Kochgerät nach Anspruch 1, wobei der Deckel (102) und der erste Behälter (110) halbkugelförmig sind und wobei in der abgesenkten Position des Deckels (102), wenn der Deckel (102) mit dem Behälter (110) gekoppelt ist, der Deckel (102) und der Behälter (110) einen geschlossenen Raum zum Halten der Lebensmittel ausbilden.

7. Kochgerät nach Anspruch 1, wobei der Deckel (102) durch einen Hohlleiter mit der mindestens einen Mikrowellenerzeugungsvorrichtung (104) gekoppelt ist, wobei der Hohlleiter von der mindestens einen Mikrowellenerzeugungsvorrichtung (104) erzeugte Mikrowellen für deren Transport von der mindestens einen Mikrowellenerzeugungsvorrichtung (104) zum Behälter (110) leitet.

8. Kochgerät nach Anspruch 1, wobei der Deckel (102) und der erste Behälter (110) halbkugelförmig sind, um die Reflexion von Mikrowellen innerhalb des Deckels (102) und des Behälters (110) für effizientes Kochen zu ermöglichen.

9. Kochgerät nach Anspruch 1, wobei das Kochgerät mindestens einen Leistungstransformator umfasst, der innerhalb des Schornsteins (108) angeordnet ist, um die Eingangsleistung zur mindestens einen Mikrowellenerzeugungsvorrichtung (104) zu regulieren.

10. Kochgerät nach Anspruch 1, wobei das Kochgerät einen Anzeigebildschirm als Benutzerschnittstelle enthält.

11. Kochgerät nach Anspruch 1, wobei die Oberseite des Behälters (110) eine Drossel enthält, um das Austreten von Mikrowellen während des Betriebs zu verhindern.

12. Kochgerät nach Anspruch 1, wobei das Kochgerät durch Internet, WLAN, Bluetooth, ZigBee oder Nahfeldkommunikation (NFC) oder eine Kombination davon als fernsteuerbare Vorrichtung ausgelegt ist.

## Revendications

1. Appareil de cuisson, comprenant :
un couvercle (102) ; et
au moins un dispositif de production de micro-ondes (104) qui sert de source de micro-ondes, et accouplé au couvercle (102) ; et
un mécanisme de levage et d'abaissement (106) supportant le couvercle (102) et l'au moins un dispositif de production de micro-ondes (104) à une extrémité inférieure pour permettre le levage et l'abaissement verticaux du couvercle (102) conjointement avec l'au moins un dispositif de production de micro-ondes (104) ; dans lequel une extrémité supérieure du mécanisme de levage et d'abaissement (106) est configurée avec un côté inférieur d'une cheminée (108) ;
dans lequel le couvercle (102) dans une position abaissée devient opérationnellement accouplé à un récipient (110) contenant un article alimentaire, et dans lequel le récipient (110) est un quelconque d'un premier récipient pour cuire un aliment en utilisant une source conventionnelle de chaleur, et d'un second récipient pour des opérations préparatoires comprenant un quelconque, ou une combinaison, de mélangeage, de brassage, de broyage et de malaxage ; et
dans lequel l'accouplement du couvercle (102) aux récipients (110) permet le chauffage des contenus du récipient (110) par l'intermédiaire des micro-ondes générées par l'au moins un dispositif de production de micro-ondes (104).

2. Appareil de cuisson de la revendication 1, dans lequel l'extrémité supérieure du mécanisme de levage et d'abaissement (106) est configurée de façon coulissante avec le côté inférieur d'une cheminée (108) pour permettre le coulissement du mécanisme de levage et d'abaissement (106) conjointement avec le couvercle (102) et l'au moins un dispositif de production de micro-ondes (104), dans une direction horizontale ; et dans lequel le coulissement horizontal du couvercle (102) et de l'au moins un dispositif de production de micro-ondes (104) permet au couvercle (102) d'être positionné par-dessus le premier récipient (110) ou le second récipient.

3. Appareil de cuisson de la revendication 2, dans lequel l'appareil de cuisson inclut en outre un cadre rectangulaire (400) configuré sur le côté inférieur de the cheminée (108) ; et dans lequel l'extrémité supérieure du mécanisme de levage et d'abaissement (106) est configurée de façon coulissante avec le côté inférieur d'une cheminée (108) par l'intermédiaire d'une paire de fentes (406) prévues dans deux côtés opposés du cadre rectangulaire (400).

4. Appareil de cuisson de la revendication 3, dans lequel le mécanisme de levage et d'abaissement (106) comprend :
une bride de dessus (502) incorporant une paire de pattes de support en forme de L (504) faisant saillie hors de la périphérie extérieure de la bride de dessus (502) à deux emplacements diamétralement opposés ; dans lequel les pattes de support en forme de L (504) sont orientées pour entrer en prise avec la paire de fentes (406) dans les deux côtés opposés du cadre rectangulaire (400) pour supporter l'extrémité supérieure de mécanisme de levage et d'abaissement (106), ainsi que permettre le coulissement du mécanisme de levage et d'abaissement (106) conjointement avec le couvercle attaché (102) et l'au moins un dispositif de production de micro-ondes (104) dans la direction horizontale.

5. Appareil de cuisson de la revendication 4, dans lequel le mécanisme de levage et d'abaissement (106) comprend en outre :
un soufflet métallique (802) ayant une extrémité supérieure fixée à la bride de dessus (502) et une extrémité inférieure fixée au couvercle (102) ;
une pluralité de tringleries d'équilibrage de poids (804) assemblées en une configuration définie avec des articulations à frottement (806), la configuration définie de la pluralité de tringleries d'équilibrage de poids (804) permettant à un ensemble des tringleries d'équilibrage de poids (804) de se déplacer entre une position étendue et une position rétractée ; et dans lequel l'ensemble des tringleries d'équilibrage de poids (804) est situé à l'intérieur du soufflet (802) ; et dans lequel une extrémité supérieure de l'ensemble des tringleries d'équilibrage de poids (804) est fixée à la bride de dessus (502) et une extrémité inférieure est fixée au couvercle (102) pour permettre le levage et l'abaissement manuels du couvercle (102) et de l'au moins un dispositif de production de micro-ondes (104) ; et dans lequel les articulations à frottement (806) maintiennent le couvercle (102) et l'au moins un dispositif de production de micro-ondes (104) dans une quelconque position souhaitée.

6. Appareil de cuisson de la revendication 1, dans lequel le couvercle (102) et le premier récipient (110) sont d'une forme hémisphérique, et dans lequel, dans la position abaissée du couvercle (102), lorsque le couvercle (102) s'accouple au récipient (110), le couvercle (102) et le récipient (110) forment un espace enfermé pour contenir les articles alimentaires.

7. Appareil de cuisson de la revendication 1, dans lequel le couvercle (102) est accouplé à l'au moins un dispositif de production de micro-ondes (104) par l'intermédiaire d'un guide d'ondes, dans lequel le guide d'ondes guide des micro-ondes générées par l'au moins un dispositif de production de micro-ondes (104) pour leur transfert depuis l'au moins un dispositif de production de micro-ondes (104) au récipient (110).

8. Appareil de cuisson de la revendication 1, dans lequel le couvercle (102) et le premier récipient (110) sont d'une forme hémisphérique pour permettre la réflexion de micro-ondes à l'intérieur du couvercle (102) et du récipient (110) pour une cuisson efficace.

9. Appareil de cuisson de la revendication 1, dans lequel l'appareil de cuisson inclut au moins un transformateur de puissance, situé à l'intérieur de la cheminée (108), pour réguler une puissance d'entrée pour l'au moins un dispositif de production de micro-ondes (104) .

10. Appareil de cuisson de la revendication 1, dans lequel l'appareil de cuisson incorpore un écran d'affichage pour une interface utilisateur.

11. Appareil de cuisson de la revendication 1, dans lequel le dessus du récipient (110) inclut un écran métallique pour empêcher des fuites de micro-ondes durant le fonctionnement.

12. Appareil de cuisson de la revendication 1, dans lequel l'appareil de cuisson est configuré sous forme de dispositif utilisable à distance par l'intermédiaire d'un quelconque, ou d'une combinaison, d'Internet, de Wi-Fi, de Bluetooth, de Zigbee, et de communication en champ proche (NFC).
